# EUROPEAN PATENT SPECIFICATION

(11) **EP 0 844 986 B1**
(45) Date of publication and mention of the grant of the patent: **30.06.2004**
(21) Application number: 96929697.9
(22) Date of filing: 16.08.1996
(51) Int. Cl.: C03C 25/40

(54) **COATED OPTICAL DEVICES AND METHODS OF MAKING THE SAME**
BESCHICHTETE OPTISCHE GERÄTE UND VERFAHREN ZU DEREN HERSTELLUNG
DISPOSITIFS OPTIQUES REVETUS ET PROCEDES DE FABRICATION ASSOCIES

(30) Priority: 16.08.1995 US 2407 P
(43) Date of publication of application: 03.06.1998
(73) Proprietor: Kion Corporation, Columbus, OH 43212 (US)
(72) Inventor: MATSUMOTO, Roger, Lee, Ken, Newark, DE 19711 (US)
(74) Representative: Andrae, Steffen, Dr.
(86) International application number: PCT/US1996/013365
(87) International publication number: WO 1997/007070

(56) References cited:
- EP-A- 0 270 220
- WO-A-95/12630
- US-A- 4 689 252
- DATABASE WPI Section Ch, Week 9321 Derwent Publications Ltd., London, GB; Class A35, AN 93-169773 XP002018875 & JP,A,05 100 102 (OLYMPUS OPTICAL CO LTD) , 23 April 1993

## Description

### Technical Field

This invention relates to novel, coated optical devices such as optical fibers and optical wave guides.

### Background Art

Optical fibers are widely used in communications systems because of their ability to carry large amounts of information over long distances. Information is transmitted through optical fibers by carrier waves of optical frequencies that are generated by sources such as lasers or light emitting diodes. Optical fibers are typically made of silica glass, although polymer clad silica fibers and polymer core fibers are known. In order to protect fibers from, for example, physical damage and from deterioration due to chemical and environmental factors, optical fibers are customarily coated with one or more protective layers.

The application of protective coatings on optical fibers provides insulation from stresses such as abrasion, fractures and corrosion, which can induce signal loss in telecommunications cables. For example, glass optical fibers are often coated with a polymeric coating for protection against abrasions and fractures. Fractures resulting from small external forces or transverse strains applied to an optical fiber, for example, while bending during manufacturing, installation and maintenance may be sufficient to cause lateral deformation and optical loss.

Additionally, environmental factors such as oxidation, moisture, high humidity, and temperature, can cause degradation of the fibers, particularly at sites where fractures and surface irregularities occur. Various chemicals, including water, can react with a fiber damaging its optical properties and weakening its mechanical strength; microcracks in fiber surfaces are especially susceptible to such chemical and water attack when a fiber is under stress. For example, it is known that water causes stress corrosion in glass, and further, it has been found recently that water can penetrate existing coatings and corrode glass fibers.

Therefore, coatings suitable for optical fibers must have protective qualities which provide, for example, a barrier from oxygen, moisture, and other chemical and environmental conditions, as well as a reduction of static fatigue and microbending loss. Further, such coatings should exhibit a combination of flexibility and toughness. Because of the difficulty in obtaining all of the desired protective properties in a single coating, an optical fiber is frequently provided with at least two coating materials. The two or more coatings may typically comprise a soft polymeric coating to protect the fiber from, for example, mechanical stress, and a harder coating to provide for example, toughness, abrasion resistance, and general ease of handling.

For efficient manufacturing and economic production, conventional coating materials may include those which can be rapidly applied to and cured on the surface of the optical fiber. A preferred coating technique typically includes "in-line" coating where the fiber is coated after it is drawn but before being taken up on a winding drum. Preferred coating materials for rapid optical fiber production include coating formulations which can be cured, for example, by radiation such as ultraviolet (UV), and thermal means.

Conventionally, optical fibers are coated with an organic coating material. Typical organic coating materials may include, for example, UV-curable polymer coating materials including radiation-curable polyurethane or polyurethane-polyurea acrylate materials. In U.S. Patent No. 5,199,098, Nolan et al. teach moisture-resistant, UV-curable acrylate resin coated optical fibers wherein the coating compositions comprise a phosphite stabilizing agent in combination with an acrylate terminated polyurethane oligomer wherein the urethane groups are the reaction product of an aliphatic isocyanate and a predominantly saturated, predominantly nonpolar aliphatic diol. Other common organic materials which provide barriers against, for example, oxygen permeation include polymer based resins such as ethylene vinyl alcohol and polyvinylidene chloride. Such materials, however, may be inefficient under extreme conditions such as high humidity and may therefore be unsuitable for many applications.

Another class of coating materials for use in providing protection to optical fibers includes carbon coatings. For example, U.S. Patent No. 5,320,659, issued in the name of Ishiguro et al., describes a method for coating the surface of an optical fiber with carbon comprising the steps of introducing an optical fiber in a reaction chamber in the same direction as the flow of a coating raw material which comprises carbon, hydrogen and halogen atoms. Carbon is deposited on the surface of the optical fiber by the chemical vapor deposition of the raw material.

Many organic coating materials, however, suffer inherent deficiencies because, for example, they cannot prevent diffusion of water vapor or hydroxyl ions to the optical fiber which may create or increase microstructural defects on the surface of the fiber and, thus, decrease the strength of the fiber.

A further class of coating materials for use on optical fibers includes inorganic hermetic coatings. inorganic hermetic coatings may be typically formed, for example, from silicon-based materials, such as silica and silicones, or other inorganic materials such as metals, and are applied by techniques such as chemical vapor deposition and other comparable techniques. In general, non-polymeric inorganic coating materials, such as silicon-based materials, are highly desirable for optical fiber applications compared to organic polymer coating materials, because silicon-based materials provide excellent protection from moisture and chemical corrosion as well as dynamic fatigue. Additionally, silicon-based coatings generally tend to have a sufficiently different refractive index than the optical fiber core, thus favorably preventing light which escapes from the core from re-entering the fiber. Accordingly, protective silicon-based coating materials have been used on light conducting devices, including optical fibers, wave guides, light pipes, or cables.

For example, in U.S. Patent No. 4,118,211, Au Coin et al. teach a method for forming a ceramic coating on the surface of an optical fiber for protection from both moisture and chemically corrosive environments. The coated fiber was formed by depositing a 0.02 to 0.20 micrometer layer of silicon nitride on a freshly drawn fused silica fiber by a chemical vapor deposition method using ammonia, silane, and nitrogen as a carrier gas, with temperatures ranging from 600°C to 1000°C. However, it has been found that such ceramic coatings are often permeable to hydrogen which may cause a deterioration of the transmission signal.

U.S. Patent No. 5,214,734, issued in the name of Inniss, et al. teaches incorporating particulate material such as silica in a polymeric jacket to enclose an optical fiber wherein the particulate material is at least partially soluble in water, such that, for example, a water and silica solution can be formed which has reduced reactivity toward the optical fiber relative to pure water to delay the expected onset of accelerated fiber fatigue. Optical fibers coated with the UV-curable liquid prepolymer jacket are believed to be protective against water because as water permeates a silica-filled jacket layer, silica is leached from the jacket and enters solution, and the permeating water which reaches the optical fiber is saturated, or nearly saturated, with silica, thereby reducing the propensity of the water for attacking the glass of the optical fiber.

Further, U.S. Patent No. 5,246,734, issued in the name of Varaprath et al., describes the formation of a unilayer amorphous silicon hermetic coating on light conducting devices, including optical fibers, wave guides, light pipes, or cables, comprising thermally decomposing in a reaction chamber halosilanes or halodisilanes in the vapor phase in the presence of the optical wave guide and a metal catalyst. An amorphous silicon is thereby hermetically coated onto the optical wave guide.

U.S. Patent No. 5,298,291, issued in the name of Klinger et al. teaches the formation of optical fibers coated with infinite network fluoro-polymers such as, for example, silicone amine C₀-C₁₆ fluoroepoxy resin and cis-trans fluoropolyol polyacrylate for protection against moisture and abrasion resistance. These fluoro-polymeric coatings taught by Klinger et al. may be UV-cured or thermally cured.

Conventional methods for coating objects with silicon-based materials may possess inherent problems relating to, among other things, deposition techniques which include, for example, chemical vapor deposition. Problems inherent in such coating techniques may include, for example, lack of uniformity or reproducibility, less efficient manufacturing, and complex or expensive set-ups. Moreover, the compositions of the conventional silicon-containing materials may not be sufficient barriers against, for example, hydrogen.

Accordingly, there has been a long-felt need for simple and reliable coatings and application techniques for such coatings which provide, among other things, protection from adverse physical and environmental conditions which can lead to deterioration of the optical fiber and subsequent failure or reduced efficiency.

The present invention is directed to the use of certain novel polymer compositions which are well suited to overcome the deficiencies of conventional coating materials currently used for optical fibers. Such polymers have advantageous properties, such as excellent moisture and chemical resistance, providing increased corrosion resistance. Additionally, the liquid or fusible polymer compositions of the present invention exhibit excellent wetting when applied to the glass fiber and are capable of permeating and coating the surfaces of microstructural flaws to prevent further deterioration at these sites. Further, these novel polymer compositions may be applied efficiently during manufacturing of the optical fiber and without the need for complex set-ups.

### Description of further prior art

The subject matter of this application is related to that of several other patents. Particularly, these patents describe, among other things, novel inorganic and inorganic/organic polymer compositions and methods of making the same.

US. Patent No. 4,929,704, in the name of Schwark, is directed to among other things, the preparation of polysilazane addition polymers which are prepared by the reaction of ammonia with one or more halogenated silicon compounds to produce cyclic silazane ammonlysis products, and then further reacting a metal-nitrogen polymer comprising a silazane ammonolysis product with 0.1% to 30% by weight of an isocyanate, isothiocyanate, ketene, thioketene, carbodiimide, or carbon disulfide. Polysilazane addition polymers containing alkenyl or alkynyl groups can be cured by supplying energy to generate free radicals. This patent further describes a method for preparing polysilazane addition polymers in which the viscosity of the polymers can be controlled. The viscosity of such polymers may be tailored to be suitable for a specific intended end use. For example, high viscosities may be desirable for making fibers, and low viscosities may be desirable for polymers used to infiltrate porous ceramic bodies or produce thin films. U.S. Patent No. 5,001,090, also in the name of Schwark and which issued from a divisional application of U.S. Patent No. 4,929,704, relates to, among other things, silicon nitride ceramics which are produced by the pyrolysis of cured or uncured polysilazane addition polymers.

Further, U.S. Patent No. 5,021,533, issued in the name of Schwark, teaches poly(thio)ureasilazane compositions prepared by the reaction of an organic isocyanate with a polysilazane comprising Si-H bonds so as to effect a reaction of the isocyanate with the silicon-nitrogen bond of the polysilazane to create a composition in which the viscosity may be controlled, and which can be subsequently followed by a crosslinking reaction. Such crosslinking can be partially initiated by raising the temperature to not greater than 300°C for a time sufficient to increase the viscosity to a value suitable for the desired end use of the polymer. Cured or uncured poly(thio)ureasilazanes can be pyrolyzed to yield a silicon-nitride containing ceramic material. Moreover, U.S. Patent No. 5,032,649, and U.S. Patent No. 5,155,181, both issued in the name of Schwark, disclose the preparation of organic amide-modified silazane polymers by the initial reaction of, for example, less than about 30 wt% of an organic amide with a polysilazane comprising Si-H bonds so as to effect reaction of the isocyanate with the silicon-nitrogen bond followed by a crosslinking reaction in which the by-product is hydrogen gas.

PCT Publication No. WO 95/12630 is directed to, among other things, compositions which comprise uncrosslinked reaction mixtures comprising at least one organic monomer, oligomer, or polymer comprising a multiplicity of organic, electrophilic substituents, and at least one metal-containing polymer comprising a metal-nitrogen polymer. Further, compositions comprise reaction mixtures comprising at least one organic monomer, oligomer, or polymer comprising a multiplicity of organic, electrophilic substituents, and at least one of (a) silicon-nitrogen polymers, (b) aluminum-nitrogen polymers, (c) boron-nitrogen polymers and (d) polymer combinations thereof, which comprise a multiplicity of sequentially bonded repeat units, the compositions comprising the reaction products of the reaction mixtures, and the compositions obtained by crosslinking the reaction products of the reaction mixtures. Crosslinking may be effected through at least one of thermal-based, radiation-based free radical-based or ionic-based crosslinking mechanisms. The compositions may be molded or shaped by various techniques into numerous useful articles. Furthermore, the compositions may be applied as coatings by various techniques onto numerous articles to enhance the performance of such articles.

### Summary of the Invention

The present invention relates to coated optical devices, such as optical fibers and optical wave guides, for protection against, among other things, microstructural defects and deterioration resulting from, for example, chemical exposure and environmental factors including gasses, high temperature, humidity and moisture. Particularly, the present invention is directed toward a method as defined in claim 1, and a coated optical device as defined in claim 8.

In a preferred embodiment of the present invention, the coating compositions comprise silicon-nitrogen polymers which further comprise sites of organounsaturation such as alkenyl or alkynyl groups. Such compositions may then be cured in a subsequent step to a rigid solid by crosslinking after application onto at least a portion of the optical fiber.

The optical devices of the present invention may be coated with the novel protective coating compositions by any manner known in the art. In one method of the present invention, at least one protective coating may be applied to an optical fiber as the fiber is drawn from the molten fiber preform. In a preferred embodiment of the present invention, the fiber is passed through a liquid coating composition immediately upon being drawn. In a further preferred embodiment wherein the optical fibers possess latent heat from the drawing process, the compositions of the present invention may be partially crosslinked or cured upon contact with the freshly drawn fibers.

Coating compositions of the present invention may exhibit excellent wetting when applied to the optical fibers, and are capable of permeating and coating the surface of microstructural defects to prevent any further deterioration at these sites. Thus, optical fibers coated with such compositions exhibit enhanced resistance to deterioration resulting from, among other things, exposure to chemicals and environmental factors.

### Detailed Description of the Invention

The present invention relates to coated optical devices, such as optical fibers and optical wave guides, for protection against, among other things, microstructural defects and deterioration resulting from, for example, chemical exposure and environmental factors including gasses, high temperature, humidity and moisture. Particularly, the present invention is directed toward methods for forming coated optical devices comprising at least one silicon nitrogen containing composition and the resulting coated optical device. It should be understood that the term optical device generally encompasses, for example, optical fibers and optical wave guides; however, when the term optical fiber is used herein it should be understood to refer to all optical devices.

While many metal-nitrogen polymer may be suitable as coating compositions for the present invention, in a particularly preferred embodiment of the present invention alkenyl-substituted silicon-nitrogen polymers are particularly preferred.

In one embodiment of the present invention the silicon-nitrogen polymer comprises the repeat unit 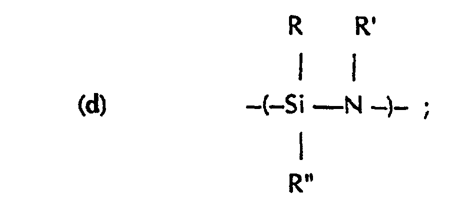 and the coating composition is prepared, by reacting ammonia, or a mixture of ammonia and a substituted or unsubstituted 1-4 carbon alkyl or aryl amine, with at least one halogenated silicon compound selected from the group consisting of RSiX₃, RR'SiX₂ and mixtures thereof, including mixtures where more than one compound having the formula RSiX₃ or RR'SiX₂ may be used. Silicon-nitrogen polymers formed by such techniques may also sometimes be referred to as an 'ammonolysis product' or a 'silazane ammonolysis product'. Optionally, RR'R"SiX, SiX₄, or mixtures thereof, can also be present. in the present invention, X may comprise a halogen including, for example, Cl, Br, and I; and R, R' and R" may be the same or different and are selected from the group consisting of H, substituted or unsubstituted 1-6 carbon alkyl, aryl, 2-6 carbon alkenyl and 2-6 carbon alkynyl groups. Optionally, at least one halogenated silicon compound may comprise a Si-H bond. Examples of halogenated silicon compounds suitable for the practice of this invention include, but are not limited to, methyldichlorosilane, vinylmethyldichlorosilane, tetrachlorosilane, tetrabromosilane, trichlorosilane, vinyltrichlorosilane, methyltrichlorosilane, phenyltrichlorosilane, ethyltrichlorosilane, propyltrichlorosilane, butyltrichlorosilane, methyltribromosilane, dimethyldichlorosilane, phenylmethyldichlorosilane, dimethyldibromosilane, trimethylchlorosilane, dimethylchlorosilane, dimethylvinylchlorosilane, and trimethylbromosilane.

Low molecular weight, liquid silicon-nitrogen polymers are preferred in the present invention since co-reactant organic monomers, oligomers, or polymers which may be used in the present invention may often be miscible with, or soluble in, liquid silicon-nitrogen polymers, and the resulting mixture may be processed without the use of a solvent vehicle. Preferably, the silicon-nitrogen polymers used have a number average molecular weight (Mₙ) of less than about 5,000 and, more preferably, less than about 2,000. Narrow molecular weight distributions (M_{w} / Mₙ < about 3.0) are preferred.

Coating compositions of the present invention may be formed with or without a solvent, as a suspension or as an emulsion. In a preferred embodiment of this invention, the reaction may be performed using liquid components and without the use of a solvent.

The coating compositions of the present invention may be cured by a number of different methods, depending on, for example, the specific coating utilized, the manner in which the coating is applied to the fiber, etc. For example, in one embodiment of the present invention, a coating composition comprising a silicon-nitrogen polymer comprising repeat unit (d) in which no organic electrophile has been reacted may be rapidly crosslinked upon contacting an optical fiber by, for example, exposure to an energy source such as thermal energy or radiation energy. In a preferred embodiment, the crosslinkable coating composition may comprise a vinyl-substituted silicon-nitrogen polymer comprising repeat unit (d). In a further preferred embodiment, the coating composition comprising a silicon-nitrogen polymer comprising repeat unit (d) further comprises a free radical generator to initiate crosslinking.

Suitable free radical generators may include, but are not limited to, organic and inorganic peroxides, alkali metal persulfates, ammonium persulfate, redox systems, aliphatic azo compounds, organic and inorganic peroxides with organic and inorganic metal compounds. For example, a suitable peroxide initiator may comprise dicumyl peroxide. Any suitable commonly known redox systems known to those who are skilled in the art may be used. Alternatively, other initiator systems may be used, such as peroxides with metal compounds as activators and benzoyl peroxide with a tertiary amine activator.

in a preferred embodiment of the present invention, the optical fiber is coated with a composition wherein the at least one silicon-nitrogen polymer comprises a polysilazane. The silicon-nitrogen polymers suitable for the practice of this invention may also comprise cyclic oligomers and ring-based and linear polymers. Low molecular weight, liquid silicon-nitrogen polymers are particularly preferred, and exhibit excellent wetting of the fiber substrate. Moreover, the liquid coating compositions of this invention may further contain a suitable free radical generator, such as a peroxide or an azo compound, in an amount effective to crosslink the polymer. In a particularly preferred embodiment the free radical generator comprises dicumyl peroxide.

Optical devices coated with compositions according to the present invention may be coated in any manner known in the art. Conventionally, at least one protective coating is applied to freshly drawn fibers as an integral part of the production process. Thus, in the method of the present invention, the at least one protective coating may be applied as the fiber is drawn from the molten preform. In a further preferred embodiment wherein optical fibers possess latent heat from the drawing process, the compositions of the present invention may be partially crosslinked or cured upon contact with the freshly drawn fiber. In another embodiment of the present invention wherein the coated fiber is remains uncrosslinked or only partially crosslinked, the coating material may be further crosslinked or cured by maintaining the fiber at an elevated temperature or by further exposing the coated fiber to at least one energy source such as a thermal energy source or radiation, for example, ultraviolet radiation, for a time sufficient to further crosslink the polymer.

The coated optical fibers of the present invention may be further coated with at least one additional protective composition. For example, least one additional coating composition such as, for example, an organic polymer, may be applied to the fiber to enhance, for example, the cushioning of the fiber. The coated optical fiber of this invention may additionally be coated with another coating material, such as one typically used in conventional optical fiber coating.

The coating compositions of the present invention may further contain at least one additional component which may further enhance the protection provided to the optical fiber by the at least one coating. For example, at least one of carbon, metal, ceramic, inorganic and organic polymeric materials may be incorporated as filler materials within such coatings.

While the preceding embodiments have been described with particularity, various modifications should be considered within the scope of the claims appended hereto.

## Claims

1. A method for forming a coated optical device comprising the steps of:
(1) providing at least one optical device;
(2) providing in contact with at least a portion of said at least one optical device at least one coating composition comprising a silicon-nitrogen polymer formed by a reaction between ammonia and at least one halogenated silicon compound selected from the group consisting of RSiX₃, RR'SiX₂ and mixtures thereof, wherein X is selected from the group consisting of Cl, Br, and I; and R and R' are the same or different and are selected from the group consisting of H, substituted or unsubstituted 1-6 carbon alkyl, aryl, 2-6 carbon alkenyl and 2-6 carbon alkynyl groups, with the proviso that the at least one coating composition does not comprise a multifunctional organic electrophile; and
(3) at least partially crosslinking said silicon-nitrogen polymer, thereby forming said coated optical device.

2. The method of claim 1, wherein said halogenated silicon compound further comprises at least one compound selected from the group consisting of RR'R"SiX and SiX₄, where R" has the same meaning as R and R'.

3. The method of claim 1, wherein at least one group of R and R' is a 2-6 carbon alkenyl or alkynyl group.

4. The method of claim 1, wherein said halogenated silicon compound further comprises at least one Si-H bond.

5. The method of claim 1, further comprising substantially completely crosslinking said at least one coating composition.

6. The method of claim 1, wherein said crosslinking comprises exposing at least a portion of said at least one composition to at least one energy source selected from the group consisting of thermal energy and radiation.

7. The method of claim 1, wherein said coating composition further comprises at least one filler material selected from the group consisting of carbon, metal, ceramic, inorganic polymeric material, and organic polymeric material.

8. A coated optical device comprising at least one at least partially crosslinked polysilazane coating composition contacting at least a portion of an optical fiber, with the proviso that the at least one coating composition does not comprise a multifunctional organic electrophile.

9. The coated optical device of claim 8, wherein said at least one at least partially crosslinked polysilazane coating composition further comprises at least one filler material selected from the group consisting of carbon, metal, ceramic, inorganic polymeric material, and organic polymeric material.

10. The coated optical device of claim 8, wherein said at least one at least partially crosslinked polysilazane coating composition is substantially completely crosslinked, and further comprises at least one additional coating composition.

11. The coated optical device of claim 10, wherein said at least one additional coating composition comprises an organic polymer composition.

## Patentansprüche

1. Verfahren zur Bildung einer beschichteten optischen Vorrichtung, das die Schritte umfaßt:
(1) Bereitstellen wenigstens einer optischen Vorrichtung;
(2) Bereitstellen, in Kontakt mit wenigstens einem Teil der genannten wenigstens einen optischen Vorrichtung, wenigstens einer Beschichtungszusammensetzung, die ein Silicium-Stickstoff-Polymer umfaßt, das durch eine Reaktion zwischen Ammoniak und wenigstens einer halogenierten Siliciumverbindung gebildet ist, die ausgewählt ist aus der Gruppe, die besteht aus RSiX₃, RR'SiX₂ und Mischungen daraus, wobei X aus der Gruppe ausgewählt ist, die besteht aus Cl, Br und I; und R und R' gleich oder verschieden sind und aus der Gruppe ausgewählt sind, die besteht aus H, substituiertem oder unsubstituiertem 1-6-Kohlenstoff-Alkyl, Aryl, 2-6-Kohlenstoff-Alkenyl und 2-6-Kohlenstoff-Alkinyl-Gruppen, mit der Maßgabe, daß die genannte wenigstens eine Beschichtungszusammensetzung kein multifunktionelles organisches Elektrophil umfaßt, und
(3) wenigstens teilweises Vernetzen des genannten Silicium-Stickstoff-Polymers, wodurch die beschichtete optische Vorrichtung gebildet wird.

2. Verfahren nach Anspruch 1, wobei die halogenierte Siliciumverbindung außerdem wenigstens eine Verbindung umfaßt, die aus der Gruppe ausgewählt ist, die besteht aus RR'R"SiX und SiX₄, wobei R" die gleiche Bedeutung aufweist wie R und R'.

3. Verfahren nach Anspruch 1, wobei wenigstens eine der Gruppen R und R' eine 2-6-Kohlenstoff-Alkenyl- oder Alkinyl-Gruppe ist.

4. Verfahren nach Anspruch 1, wobei die halogenierte Siliciumverbindung außerdem wenigstens eine Si-H-Bindung aufweist.

5. Verfahren nach Anspruch 1, das außerdem das im wesentlichen vollständige Vernetzen der wenigstens einen Beschichtungszusammensetzung umfaßt.

6. Verfahren nach Anspruch 1, wobei man bei dem Vernetzen wenigstens einen Teil der genannten wenigstens einen Zusammensetzung wenigstens einer Energiequelle aussetzt, die aus der Gruppe ausgewählt ist, die besteht aus thermischer Energie und Strahlung.

7. Verfahren nach Anspruch 1, wobei die genannte Beschichtungszusammensetzung außerdem wenigstens ein Füllstoffmaterial umfaßt, das aus der Gruppe ausgewählt ist, die besteht aus Kohlenstoff, Metall, Keramik, anorganischem Polymermaterial und organischem Polymermaterial.

8. Beschichtete optische Vorrichtung, die wenigstens eine wenigstens teilweise vernetzte Polysilazan-Überzugszusammensetzung aufweist, die wenigstens einen Teil einer optischen Faser kontaktiert, mit der Maßgabe, daß die wenigstens eine Beschichtungszusammensetzung kein multifunktionelles organisches Elektrophil umfaßt.

9. Beschichtete optische Vorrichtung nach Anspruch 8, wobei die wenigstens eine wenigstens teilweise vernetzte Polysilazan-Beschichtungszusammensetzung außerdem wenigstens ein Füllstoffmaterial umfaßt, das aus der Gruppe ausgewählt ist, die besteht aus Kohlenstoff, Metall, Keramik, anorganischem Polymermaterial und organischem Polymermaterial.

10. Beschichtete optische Vorrichtung nach Anspruch 8, bei der die wenigstens eine wenigstens teilweise vernetzte Polysilazan-Beschichtungszusammensetzung im wesentlichen vollständig vernetzt ist, und die außerdem wenigstens eine zusätzliche Beschichtungszusammensetzung aufweist.

11. Beschichtete optische Vorrichtung nach Anspruch 10, wobei die wenigstens eine zusätzliche Beschichtungszusammensetzung eine organische Polymerzusammensetzung umfaßt.

## Revendications

1. Procédé pour former un dispositif optique revêtu, comprenant les étapes consistant :
1) à fournir au moins un dispositif optique ;
2) à fournir, en contact avec au moins une partie dudit au moins un dispositif optique, au moins une composition de revêtement comprenant un polymère silicium-azote formé par une réaction entre l'ammoniac et au moins un composé de silicium halogéné choisi dans le groupe consistant en RSiX₃, RR'SiX₂ et leurs mélanges, dans lesquels X est choisi dans le groupe consistant en Cl, Br et I ; et R et R' sont identiques ou différents et sont choisis dans le groupe consistant en H, un groupe alkyle de 1 à 6 atomes de carbone substitué ou non substitué, un groupe aryle, un groupe alcényle de 2 à 6 atomes de carbone et un groupe alcynyle de 2 à 6 atomes de carbone, sous réserve que ladite au moins une composition de revêtement ne comprenne pas un agent électrophile organique multifonctionnel ; et
(3) à réticuler au moins partiellement ledit polymère silicium-azote, en formant ainsi ledit dispositif optique revêtu.

2. Procédé suivant la revendication 1, dans lequel ledit composé de silicium halogéné comprend en outre au moins un composé choisi dans le groupe consistant en RR'R"SiX et SiX₄, dans lesquels R" répond à la même définition que R et R'.

3. Procédé suivant la revendication 1, dans lequel au moins un groupe de R et R' est un groupe alcényle ou alcynyle ayant 2 à 6 atomes de carbone.

4. Procédé suivant la revendication 1, dans lequel ledit composé de silicium halogéné comprend en outre au moins une liaison Si-H.

5. Procédé suivant la revendication 1, comprenant en outre la réticulation pratiquement totale de ladite au moins une composition de revêtement.

6. Procédé suivant la revendication 1, dans lequel ladite réticulation comprend l'exposition d'au moins une partie de ladite au moins une composition à au moins une source d'énergie choisie dans le groupe consistant en l'énergie thermique et un rayonnement.

7. Procédé suivant la revendication 1, dans lequel ladite composition de revêtement comprend en outre au moins une matière servant de charge choisie dans le groupe consistant en carbone, un métal, une matière céramique, une matière polymère inorganique et une matière polymère organique.

8. Dispositif optique revêtu comprenant au moins une composition de polysilazane de revêtement au moins partiellement réticulée par contact avec au moins une partie d'une fibre optique, sous réserve que ladite au moins une composition ne comprenne pas un agent électrophile organique multifonctionnel.

9. Dispositif optique revêtu suivant la revendication 8, dans lequel ladite au moins une composition de polysilazane de revêtement au moins partiellement réticulée comprend en outre au moins une matière servant de charge choisie dans le groupe consistant en carbone, un métal, une matière céramique, une matière polymère inorganique et une matière polymère organique.

10. Dispositif optique revêtu suivant la revendication 8, dans lequel ladite au moins une composition de polysilazane de revêtement au moins partiellement réticulée est réticulée pratiquement totalement, et comprend en outre au moins une composition de revêtement supplémentaire..

11. Dispositif optique revêtu suivant la revendication 10, dans lequel ladite au moins une composition de revêtement supplémentaire comprend une composition d'un polymère organique.
